# EUROPEAN PATENT APPLICATION

(11) **EP 4 600 407 A2**
(43) Date of publication of application: **13.08.2025**
(21) Application number: 25155630.4
(22) Date of filing: 03.02.2025
(51) Int. Cl.: C25B 1/042, C25B 15/021

(54) **ELECTROLYSIS SYSTEM**

(30) Priority: 06.02.2024 JP 2024016577
(71) Applicant: Aisin Corporation, Aichi 448-8650 (JP)
(72) Inventor: KATO, Yoshiki, KARIYA, 448-8650 (JP); OGURI, Nobuaki, KARIYA, 448-8650 (JP)
(74) Representative: Cabinet Beau de Loménie

(57) **Abstract**

An electrolysis system (10) includes: an electrolysis cell (20) configured to generate hydrogen by high-temperature steam electrolysis; a steam generation unit (30) that has a refrigerant heat exchange unit configured to perform heat exchange between heat of a heat storage unit and a refrigerant, generates a steam by heating raw material water via the refrigerant subjected to the heat exchange in the refrigerant heat exchange unit, and supplies the steam to the electrolysis cell; a heat storage supply unit (50) that has the heat storage unit and configured to supply heat of the heat storage unit to the refrigerant heat exchange unit; and a control unit (70) configured to control the heat storage supply unit such that an amount of heat input to the refrigerant heat exchange unit is smaller during a system startup or during a high-temperature standby than during a normal operation.

## Description

### TECHNICAL FIELD

This disclosure relates to an electrolysis system.

### BACKGROUND DISCUSSION

In the related art, as this type of electrolysis system, a system is proposed that includes a solid oxide electrolysis cell (SOEC) that produces hydrogen by high-temperature steam electrolysis while consuming electrical energy, and a heat pump that is made of an evaporator, a condenser, a compressor, and a throttle valve, and that generates steam by passing low-temperature heat through the evaporator and heating supply water in the condenser, and supplies the steam to the SOEC (see, for example, JP 2018-517233A (Reference 1)).

When a heat storage unit is provided to store heat (low-temperature heat) to be supplied to the heat pump, heat can be supplied stably. However, if the heat is wasted, a heat shortage may occur or the heat storage unit may need to be increased in size.

A need thus exists for an electrolysis system that generates a steam by exchanging heat between heat of a heat storage unit and a refrigerant and heating raw material water via the refrigerant, while preventing wasteful heat consumption.

### SUMMARY

According to an aspect of this disclosure, an electrolysis system includes: an electrolysis cell configured to generate hydrogen by high-temperature steam electrolysis; a steam generation unit that has a refrigerant heat exchange unit configured to perform heat exchange between heat of a heat storage unit and a refrigerant, generates a steam by heating raw material water via the refrigerant subjected to the heat exchange in the refrigerant heat exchange unit, and supplies the steam to the electrolysis cell; a heat storage supply unit that has the heat storage unit and configured to supply heat of the heat storage unit to the refrigerant heat exchange unit; and a control unit configured to control the heat storage supply unit such that an amount of heat input to the refrigerant heat exchange unit is smaller during a system startup or during a high-temperature standby than during a normal operation.

The electrolysis system according to this disclosure has the refrigerant heat exchange unit that performs heat exchange between the heat of the heat storage unit and the refrigerant, and generates the steam by heating raw material water via the refrigerant. During the system startup or the high-temperature standby, the heat storage supply unit is controlled such that the amount of heat input to the refrigerant heat exchange unit is reduced compared to during the normal operation. Accordingly, it is possible to reduce wasteful consumption of heat in the heat storage unit. As a result, the heat storage unit can be made smaller in size.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a schematic diagram of an electrolysis system according to the present embodiment;
FIG. 2 is a flowchart showing an example of steam heat pump control processing;
FIGS. 3A and 3B are diagrams showing a flow of hot water to a steam heat pump during a system startup mode or a high-temperature standby mode in a comparative example and the present embodiment;
FIG. 4 is a diagram showing a control effect of the steam heat pump in the system startup mode or the high-temperature standby mode in the comparative example and the present embodiment;
FIG. 5 is a flowchart showing steam heat pump control processing according to another embodiment; and
FIG. 6 is a diagram showing a control effect of the steam heat pump in the system startup mode or the high-temperature standby mode in a comparative example and another embodiment.

### DETAILED DESCRIPTION

Embodiments of the present disclosure will be described with reference to the drawings.

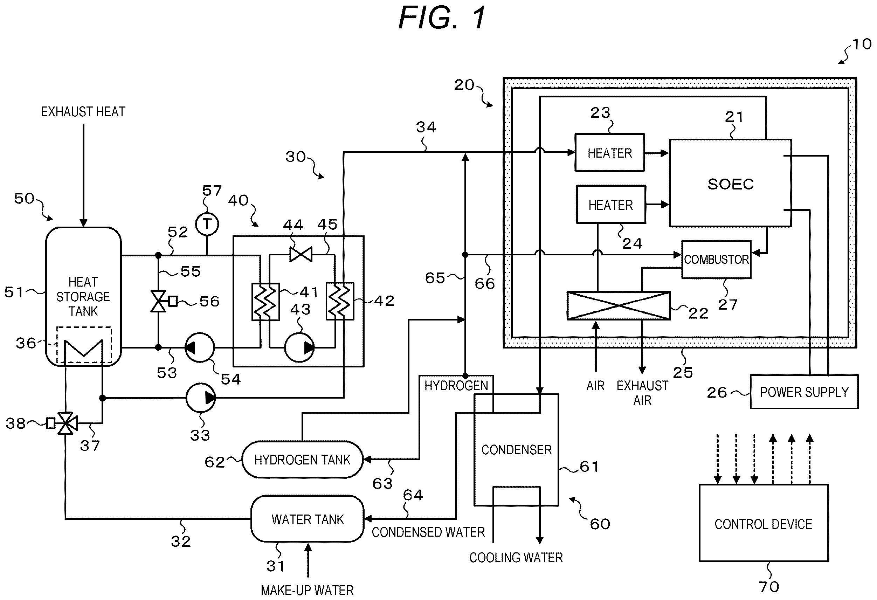

FIG. 1 is a schematic diagram of an electrolysis system 10 according to the present embodiment. The electrolysis system 10 according to the present embodiment includes an electrolysis module 20 (or electrolysis cell) including an electrolysis cell stack 21 that generates hydrogen by steam electrolysis, a steam supply system 30 (or steam generation unit) that generates steam by a steam heat pump 40 (or refrigerant heat exchange unit) and supplies the steam to the electrolysis module 20, a heat storage supply system 50 (or heat storage supply unit) that stores exhaust heat outside the system in a heat storage tank 51 and supplies the stored exhaust heat to the steam heat pump 40, an air supply system that supplies air as a sweep gas to the electrolysis module 20, a hydrogen recovery system 60 that recovers hydrogen generated in the electrolysis cell stack 21, and a control device 70 (or control unit) that controls the entire system.

The electrolysis module 20 includes, in addition to the electrolysis cell stack 21, a heat exchanger 22, heaters 23, 24 (for example, sheath heaters), and a combustor 27, which are accommodated in a module case 25 having heat insulating properties.

The electrolysis cell stack 21 includes a plurality of solid oxide single cells each including a solid electrolyte, a fuel electrode disposed on one surface side of the solid electrolyte, and an oxidant electrode disposed on the other surface side of the solid electrolyte. The electrolysis cell stack 21 generates hydrogen at the fuel electrode and generates oxygen at the oxidant electrode by electrolyzing a steam supplied to the fuel electrode by receiving electric power supplied from a power supply 26. As the power supply 26, a system power supply, renewable energy (for example, a solar photovoltaic device), a storage battery, or the like can be used. The combustor 27 introduces an oxidant electrode off gas discharged from the oxidant electrode of the electrolysis cell stack 21 and hydrogen supplied from a hydrogen supply line 65, and combusts a mixed gas. A temperature of the electrolysis cell stack 21 is increased by combustion heat generated in the combustor 27 and a combustion exhaust gas. The combustion exhaust gas discharged from the combustor 27 is discharged to an outside air through the heat exchanger 22.

Since the electrolysis cell stack 21 operates in a high-temperature environment of, for example, 650°C to 800°C, the solid electrolyte, the fuel electrode, and the oxidant electrode are produced using a ceramic material. In order to decompose the steam into oxygen ions and hydrogen by a catalyst, a cermet of a metal such as nickel having a catalytic action and ceramics is used for the fuel electrode. In order to maintain good catalytic activity of the fuel electrode, it is necessary to keep the fuel electrode in a reducing atmosphere and prevent oxidation of the metal. Therefore, in the present embodiment, the steam supplied to the fuel electrode is mixed with a small amount of hydrogen as a reducing gas.

The steam supply system 30 includes a water tank 31 storing raw material water (pure water), the steam heat pump 40 that generates a steam from the raw material water, a raw material water supply line 32 connecting the water tank 31 and the steam heat pump 40, a raw material water pump 33 installed in the raw material water supply line 32, and a steam supply line 34 connecting the steam heat pump 40 and the electrolysis module 20. The raw material water stored in the water tank 31 is supplied to the steam heat pump 40 via the raw material water supply line 32 by driving the raw material water pump 33, is converted into the steam by the steam heat pump 40, and is then supplied to the electrolysis module 20 via the steam supply line 34. Further, the steam supplied to the electrolysis module 20 is increased in temperature to a required temperature by the heater 23, and then supplied to the fuel electrode of the electrolysis cell stack 21.

The raw material water supply line 32 is provided with a heat exchange unit 36 that heats the raw material water flowing through the raw material water supply line 32 by heat exchange with the hot water stored in the heat storage tank 51, a bypass line 37 that branches from and joins the raw material water supply line 32 to bypass the heat exchange unit 36, and a control valve 38 (a three-way valve) installed at a branch point of the raw material water supply line 32.

The steam heat pump 40 (or refrigerant heat exchange unit) exchanges heat supplied from the heat storage supply system 50 (hot water) with the refrigerant, and generates a steam (a saturated steam) from the raw material water via the refrigerant. The steam heat pump 40 includes an evaporator 41, a condenser 42, a compressor 43, an expansion valve 44, and a circulation pipe 45 connecting these components such that the refrigerant circulates therebetween. The refrigerant circulating in the circulation pipe 45 absorbs the heat from the heat storage supply system 50 and evaporates in the evaporator 41, is compressed into a high-temperature and high-pressure gas in the compressor 43, and is supplied to the condenser 42. Further, the refrigerant supplied to the condenser 42 releases the heat in the condenser 42 to heat the raw material water, thereby generating the steam. The refrigerant that passes through the condenser 42 becomes liquid, is decompressed by the expansion valve 44, and returns to the evaporator 41.

The heat storage supply system 50 includes the heat storage tank 51, a hot water supply line 52 connecting a hot water outlet of the heat storage tank 51 and a hot water inlet of the steam heat pump 40 (the evaporator 41), a hot water discharge line 53 connecting a hot water outlet of the steam heat pump 40 (the evaporator 41) and a hot water inlet of the heat storage tank 51, a hot water bypass line 55 connecting the hot water supply line 52 and the hot water discharge line 53 to bypass the heat storage tank 51 with respect to the steam heat pump 40, and a hot water adjustment valve 56 installed in the hot water bypass line 55. The heat storage tank 51 stores the hot water heated by heat exchange with the exhaust heat outside the system, and keeps the hot water in a predetermined temperature range (for example, 60°C to 80°C). As the exhaust heat outside the system, for example, exhaust heat at a low temperature (for example, 100°C or lower) that cannot be used (unused exhaust heat) is used in a facility that generates a lot of exhaust heat, such as factory exhaust heat. By effectively utilizing the unused exhaust heat, efficiency of the system can be improved.

Although not shown, the air supply system includes an air filter and an air blower, and when the air blower is driven, air is absorbed through the air filter and supplied to the electrolysis module 20. The air supplied to the electrolysis module 20 passes through the heat exchanger 22 and the heater 24, is heated to a required temperature by heat exchange with the combustion exhaust gas and heat of the heater 24, and is then supplied to the oxidant electrode of the electrolysis cell stack 21.

The hydrogen recovery system 60 includes a condenser 61, a hydrogen tank 62, a hydrogen recovery line 63 connecting the condenser 61 and the hydrogen tank 62, and a condensed water recovery line 64 connecting the condenser 61 and the water tank 31. A fuel electrode off gas containing hydrogen and the steam discharged from the fuel electrode of the electrolysis cell stack 21 is supplied to the condenser 61. The fuel electrode off gas supplied to the condenser 61 is condensed into the steam by heat exchange with cooling water, and is then recovered into the hydrogen tank 62 from the hydrogen recovery line 63 by a booster pump (not shown). Condensed water generated by condensation of the fuel electrode off gas in the condenser 61 is recovered in the water tank 31 through the condensed water recovery line 64. The water stored in the water tank 31 is used as the raw material water for generating a steam for electrolysis.

The hydrogen recovery system 60 also includes the hydrogen supply line 65 branching from the hydrogen recovery line 63 and connected to the steam supply line 34. The hydrogen supply line 65 supplies a part of the fuel electrode off gas (hydrogen) passing through the condenser 61 as a reducing gas to the fuel electrode of the electrolysis cell stack 21. The hydrogen supply line 65 is connected to the hydrogen tank 62 and branches into a combustion hydrogen supply line 66 that leads to the combustor 27, and can supply a part of the fuel electrode off gas passing through the condenser 61 to the combustor 27 as a combustion gas, or can supply hydrogen stored in the hydrogen tank 62 to the combustor 27 as the combustion gas.

Although not shown, the control device 70 is implemented as a microprocessor including a CPU as a main component, and includes, in addition to the CPU, a ROM for storing a processing program, a RAM for temporarily storing data, and an input and output port. Detection signals from a temperature sensor installed in the vicinity of the electrolysis cell stack 21, a temperature sensor installed in the heat storage tank 51, a temperature sensor 57 installed in the vicinity of the hot water inlet of the steam heat pump 40 (the evaporator 41) installed in the hot water supply line 52, a flow rate sensor installed in the water steam supply line 34, and the like are input to the control device 70 via an input port. Meanwhile, control signals to the heaters 23, 24, the power supply 26, the raw material water pump 33, the control valve 38, a hot water pump 54, the hot water adjustment valve 56, an air pump, the steam heat pump 40, and the like are output from the control device 70 via an output port.

Next, an operation of the electrolysis system 10 according to the present embodiment implemented as described above will be described. The electrolysis system 10 has a normal operation mode, a system startup mode, and a high-temperature standby mode as an operation mode (a system state).

The normal operation mode is a mode for producing hydrogen by high-temperature steam electrolysis. The normal operation mode is performed by generating a steam from raw material water using the steam heat pump 40, increasing a temperature of the generated steam using the heater 23 and supplying the steam to the fuel electrode of the electrolysis cell stack 21, increasing a temperature of air as a sweep gas using the heater 24 and supplying the air to the oxidant electrode of the electrolysis cell stack 21, and supplying electric power from the power supply 26 to the electrolysis cell stack 21.

In the normal operation mode, the steam supplied to the fuel electrode of the electrolysis cell stack 21 is decomposed into hydrogen and oxygen ions (O²⁻) at the fuel electrode by an electrolytic action, and oxygen is generated at the oxidant electrode by the oxygen ions permeating through the solid electrolyte. Hydrogen generated at the fuel electrode is discharged from the electrolysis cell stack 21 as a fuel electrode off gas together with the steam that is not reacted by electrolysis, and is supplied to the hydrogen recovery system 60. Further, the fuel electrode off gas supplied to the hydrogen recovery system 60 is cooled by heat exchange with the cooling water in the condenser 61 to remove the steam, and then is recovered in the hydrogen tank 62 through the hydrogen recovery line 63. A part of the fuel electrode off gas (hydrogen) passing through the condenser 61 is supplied as a reducing gas to the fuel electrode of the electrolysis cell stack 21 through the hydrogen supply line 65.

The system startup mode is a mode in which the system is started up by increasing the temperature of the electrolysis cell stack 21 to a temperature at which hydrogen can be produced by steam electrolysis (a hydrogen production possible temperature). The system startup mode is performed by increasing the temperature of the steam generated by the steam heat pump 40 with the heater 23 and supplying the steam to the fuel electrode of the electrolysis cell stack 21, and increasing the temperature of the air with the heater 24 and supplying the air to the oxidant electrode of the electrolysis cell stack 21, so that the temperature of the electrolysis cell stack 21 is increased to the hydrogen production possible temperature while stopping the supply of the electric power from the power supply 26. The high-temperature standby mode is a mode in which the inside of the electrolysis module 20 (the electrolysis cell stack 21) is kept at a predetermined temperature (a standby temperature) such that the transition to the next normal operation mode can be made quickly after the normal operation mode is ended. The high-temperature standby mode is performed by increasing the temperature of the steam generated by the steam heat pump 40 with the heater 23 and supplying the steam to the fuel electrode of the electrolysis cell stack 21, and increasing the temperature of the air with the heater 24 and supplying the air to the oxidant electrode of the electrolysis cell stack 21, such that the temperature of the electrolysis cell stack 21 is kept at the standby temperature while stopping the supply of the electric power from the power supply 26. In addition, in both the system startup mode and the high-temperature standby mode, in order to reduce electric power consumption of the heaters 23, 24, hydrogen may be supplied from the hydrogen tank 62 to the combustor 27 via the hydrogen supply line 65 and the combustion hydrogen supply line 66, and the air may be supplied from the air supply system to the combustor 27 via the oxidant electrode of the electrolysis cell stack 21 and combusted in the combustor 27, and thus the temperature of the electrolysis cell stack 21 may be increased or kept constant.

In the electrolysis system 10 according to the present embodiment, the unused exhaust heat outside the system is stored in the heat storage tank 51 as the hot water, and in the steam heat pump 40, the heat of the hot water from the heat storage tank 51 is pumped up and transferred to the raw material water, thereby heating the raw material water and generating the steam. Further, the electrolysis system 10 increases the temperature of the generated steam to a required temperature by the heater 23 or the like, and then supplies the steam to the fuel electrode of the electrolysis cell stack 21. Accordingly, the unused exhaust heat can be used for a latent heat (a state change) of the raw material water, and the unused exhaust heat can be efficiently utilized to further improve system efficiency. Further, the electrolysis system 10 according to the present embodiment includes the heat storage tank 51. By controlling an amount of heat input from the heat storage tank 51 to the steam heat pump 40 (the evaporator 41) according to a state of the electrolysis system 10, wasteful heat consumption in the heat storage tank 51 is reduced, and the heat (the hot water) can be stably supplied to the steam heat pump 40 (the evaporator 41) using the heat storage tank 51 with a relatively small capacity.

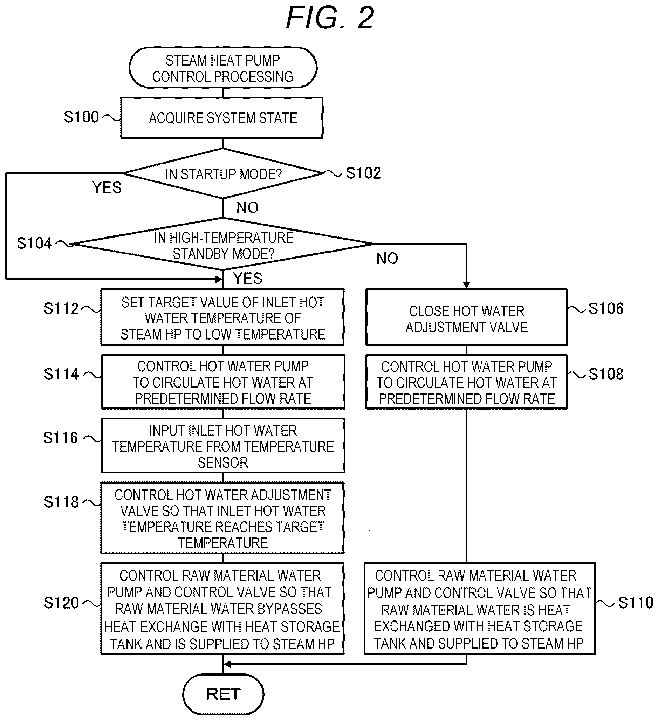

FIG. 2 is a flowchart showing an example of steam heat pump control processing executed by the control device 70 (the CPU). The processing is repeatedly executed at predetermined time intervals.

When the steam heat pump control processing is executed, the control device 70 acquires a system state (S100), and determines whether the system is in the system startup mode (S102) and whether the system is in the high-temperature standby mode (S104). When the control device 70 determines that the system is not in the system startup mode or the high-temperature standby mode, the control device 70 determines that the system is in the normal operation mode, closes the hot water adjustment valve 56 (S106), and controls the hot water pump 54 such that the hot water passes through the evaporator 41 at a constant flow rate (S108). Accordingly, the hot water in the heat storage tank 51 is introduced into the hot water inlet of the evaporator 41 of the steam heat pump 40, passes through the evaporator 41 to exchange heat with the refrigerant, and then is discharged from the hot water outlet of the evaporator 41 and returns to the heat storage tank 51. Then, the control device 70 controls the raw material water pump 33 and the control valve 38 such that the raw material water in the water tank 31 passes through the heat exchange unit 36 of the heat storage tank 51 and then is supplied to the condenser 42 of the steam heat pump 40 (S110), and ends the steam heat pump control processing. Accordingly, in the normal operation mode, the evaporator 41 of the steam heat pump 40 is supplied with the hot water at a relatively high temperature, and the condenser 42 of the steam heat pump 40 is supplied with the raw material water at a relatively high temperature. Therefore, a large amount of steam can be generated in the steam heat pump 40, and a large amount of hydrogen can be efficiently produced according to a request.

On the other hand, when the control device 70 determines in S102 that the system is in the system startup mode, or in S104 that the system is in the high-temperature standby mode, the control device 70 sets a target value for the inlet hot water temperature of the steam heat pump 40 (the evaporator 41) to a temperature (for example, 60°C) lower than a hot water temperature in the heat storage tank 51 (for example, 80°C) (S112). Next, the control device 70 controls the hot water pump 54 such that the hot water passes through the evaporator 41 at a constant flow rate (S114). Next, the control device 70 inputs the inlet hot water temperature of the steam heat pump 40 (the evaporator 41) detected by the temperature sensor 57 (S116), and controls the hot water adjustment valve 56 by feedback control so that the input inlet hot water temperature is the target temperature set in S112 (S118). Then, the control device 70 controls the raw material water pump 33 and the control valve 38 so that the raw material water in the water tank 31 bypasses the heat exchange unit 36 of the heat storage tank 51 and is supplied to the condenser 42 of the steam heat pump 40 (S120), and ends the steam heat pump control processing. Accordingly, in the system startup mode or the high-temperature standby mode, the evaporator 41 of the steam heat pump 40 is supplied with the hot water at a relatively low temperature, and the condenser 42 of the steam heat pump 40 is supplied with the raw material water at a relatively low temperature. In S120, the control device 70 controls the control valve 38 so that the raw material water from the water tank 31 bypasses the heat exchange unit 36 and is supplied to the condenser 42 of the steam heat pump 40, whereas the control valve 38 may also be controlled so that a part of the raw material water from the water tank 31 passes through the heat exchange unit 36.

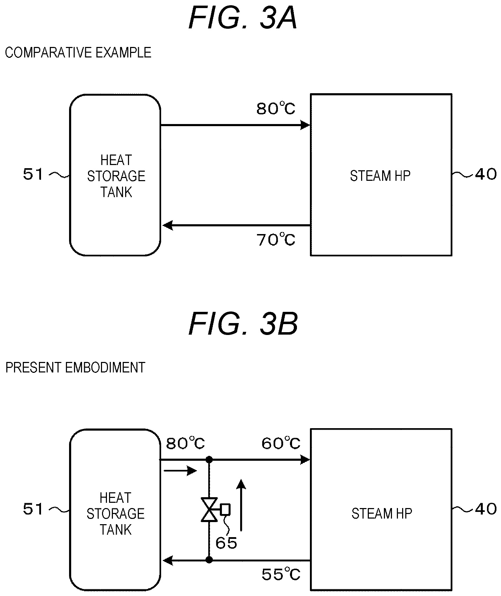

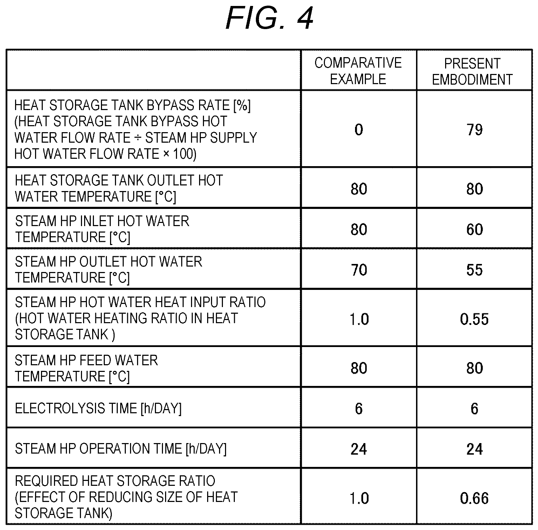

FIGS. 3A and 3B are diagrams showing a flow of the hot water to the steam heat pump in the system startup mode or the high-temperature standby mode in the comparative example and the present embodiment, and FIG. 4 is a diagram showing a control effect of the steam heat pump in the system startup mode or the high-temperature standby mode in the comparative example and the present embodiment. In the comparative example, during the system startup mode or the high-temperature standby mode, the heat storage supply system 50 supplies the hot water from the heat storage tank 51 to the hot water inlet of the steam heat pump 40 (the evaporator 41), and circulates the hot water between the heat storage tank 51 and the steam heat pump 40 (the evaporator 41) so that all of the hot water discharged from the hot water outlet of the steam heat pump 40 (the evaporator 41) is returned to the heat storage tank 51 (see FIG. 3A). In contrast, in the present embodiment, during the system startup mode or the high-temperature standby mode, the heat storage supply system 50 circulates a part of the hot water passing through the hot water outlet of the steam heat pump 40 (the evaporator 41) to the hot water inlet of the steam heat pump 40 (the evaporator 41), bypassing the heat storage tank 51 (see FIG. 3B). Accordingly, in the present embodiment, during the system startup mode or the high-temperature standby mode in which a large amount of steam is not required, the flow rate of the hot water discharged from the heat storage tank 51 (a heat storage tank supply hot water flow rate) can be reduced, and wasteful consumption of the hot water (the heat) in the heat storage tank 51 can be reduced. As a result, as shown in FIG. 4, in the present embodiment, a required amount of heat storage in the heat storage tank 51 can be reduced compared to the comparative example, and the heat storage tank 51 can be made smaller in size. In addition, in the present embodiment, during the system startup mode or the high-temperature standby mode, the steam supply system 30 supplies the raw material water in the water tank 31 to the steam heat pump 40 (the condenser 42) at a low temperature without passing it through the heat exchange unit 36 of the heat storage tank 51, thereby further reducing the wasteful consumption of the hot water (the heat) in the heat storage tank 51 and making it possible to further reduce the size of the heat storage tank 51.

In the above-described embodiment, in the system startup mode or the high-temperature standby mode, the heat storage supply system 50 causes a part of the hot water discharged from the hot water outlet of the steam heat pump 40 (the evaporator 41) to bypass the heat storage tank 51 and return to the hot water inlet of the steam heat pump 40 (the evaporator 41). However, in the system startup mode or the high-temperature standby mode, the heat storage supply system 50 may return all of the hot water discharged from the hot water outlet of the steam heat pump 40 (the evaporator 41) to the heat storage tank 51, while reducing the flow rate of the hot water circulating between the heat storage tank 51 and the steam heat pump 40 (the evaporator 41) compared to the normal operation mode. In this case, the hot water bypass line 55 and the hot water adjustment valve 56 may be omitted.

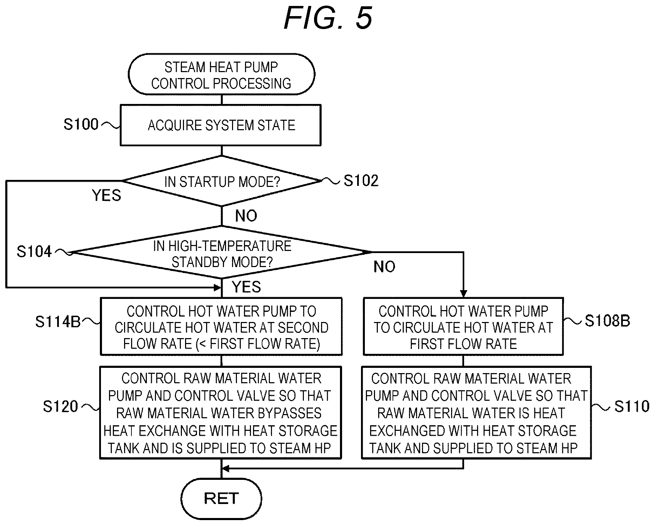

FIG. 5 is a flowchart showing steam heat pump control processing according to another embodiment. Among the processing of the steam heat pump control processing of FIG. 5, the same processing as those of the steam heat pump control processing of FIG. 2 are denoted by the same step numbers, and a description thereof is omitted to avoid duplication. In the steam heat pump control processing according to another embodiment, when the control device 70 determines in S102 or S104 that the system is not in the system startup mode or the high-temperature standby mode, but is in the normal operation mode, the control device 70 controls the hot water pump 54 so that the hot water circulates between the heat storage tank 51 and the steam heat pump 40 (the evaporator 41) at a first flow rate (S108B), and then proceeds the processing to S110. On the other hand, when the control device 70 determines in S102 that the system is in the system startup mode, or in S104 that the system is in the high-temperature standby mode, the control device 70 reduces a rotation speed of the hot water pump 54 so that the hot water is circulated at a second flow rate that is lower than the first flow rate (S114B), and proceeds the processing to S120.

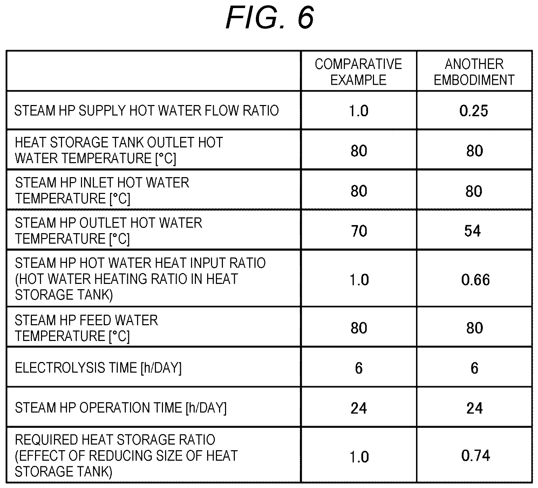

FIG. 6 is a diagram showing a control effect of the steam heat pump in the system startup mode or the high-temperature standby mode in the comparative example and the present embodiment. In another embodiment, the heat storage supply system 50 reduces the flow rate of circulating hot water (the heat storage tank supply hot water flow rate) in the system startup mode or the high-temperature standby mode compared to the normal operation mode. Accordingly, in another embodiment, as in the present embodiment, the flow rate of hot water discharged from the heat storage tank 51 (the heat storage tank supply hot water flow rate) can be reduced during system startup mode or high-temperature standby mode, and wasteful consumption of the hot water (the heat) in the heat storage tank 51 can be reduced. As a result, as shown in FIG. 6, in another embodiment, a required amount of heat storage in the heat storage tank 51 can be reduced compared to the comparative example, and the heat storage tank 51 can be made smaller in size.

In the above-described embodiment, the raw material water supply line 32 is provided with the heat exchange unit 36 that exchanges heat between the raw material water from the water tank 31 and the hot water in the heat storage tank 51. However, the heat exchange unit 36 may be omitted.

In the above-described embodiment, the steam supplied from the steam supply system 30 to the electrolysis module 20 is heated by the heater 23, whereas the steam may be heated by heat exchange with the fuel electrode off gas or the oxidant electrode off gas discharged from the electrolysis cell stack 21, or may be heated by heat exchange with the combustion exhaust gas discharged from the combustor 27.

In the above-described embodiment, the electrolysis module 20 includes the heaters 23, 24 and the combustor 27. However, any one of the heaters 23, 24 and the combustor 27 may be omitted.

In the above-described embodiment, a part of the fuel electrode off gas from which the steam is removed by passing through the condenser 61 is returned to the fuel electrode of the electrolysis cell stack 21 as a reducing gas. However, pressurized hydrogen in the hydrogen tank 62 may be supplied to the fuel electrode. A part of the fuel electrode off gas before passing through the condenser 61 may be returned to the fuel electrode in the electrolysis module 20 (the module case 25).

In the above-described embodiment, the electrolysis system 10 includes the electrolysis cell stack 21 that generates hydrogen by high-temperature steam electrolysis. However, the electrolysis system 10 may use the electrolysis cell stack 21 as a reversible operation solid oxide cell stack to selectively perform the above-described electrolysis operation and a power generation operation in which power is generated by a reaction between hydrogen as a fuel gas and oxygen contained in an oxidant gas. In the electrolysis operation, hydrogen is introduced as the fuel gas from the hydrogen tank 62 to the fuel electrode of the electrolysis cell stack 21, and air is introduced as the oxidant gas from the air supply system to the oxidant electrode of the electrolysis cell stack 21. Further, at the oxidant electrode, oxide ions (O²⁻) are generated, and the oxide ions pass through the solid electrolyte and react with hydrogen at the fuel electrode to obtain electrical energy.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

### Industrial Applicability

The present disclosure can be utilized in a production industry of an electrolysis system.

## Claims

1. An electrolysis system (10) comprising:
an electrolysis cell (20) configured to generate hydrogen by high-temperature steam electrolysis;
a steam generation unit (30) that has a refrigerant heat exchange unit (40) configured to perform heat exchange between heat of a heat storage unit and a refrigerant, generates a steam by heating raw material water via the refrigerant subjected to the heat exchange in the refrigerant heat exchange unit (40), and supplies the steam to the electrolysis cell (20);
a heat storage supply unit (50) that has the heat storage unit and configured to supply heat of the heat storage unit to the refrigerant heat exchange unit (40); and
a control unit (70) configured to control the heat storage supply unit (50) such that an amount of heat input to the refrigerant heat exchange unit (40) is smaller during a system startup or during a high-temperature standby than during a normal operation.

2. The electrolysis system (10) according to claim 1, wherein
the heat storage supply unit (50) includes a supply line (52) connected to a heat outlet of the heat storage unit and a heat inlet of the refrigerant heat exchange unit (40), a discharge line (53) connected to a heat outlet of the refrigerant heat exchange unit (40) and a heat inlet of the heat storage unit, a pump (54) configured to circulate heat between the heat storage unit and the refrigerant heat exchange unit (40), a bypass line (55) connected to the supply line (52) and the discharge line (53) to bypass the heat storage unit to the refrigerant heat exchange unit (40), and an adjustment valve (56) configured to adjust a bypass amount of heat discharged from the heat outlet of the refrigerant heat exchange unit (40) to the discharge line (53), and
the control unit (70) controls the amount of heat input to the refrigerant heat exchange unit (40) by adjusting the bypass amount of heat by the adjustment valve (56).

3. The electrolysis system (10) according to claim 1, wherein
the heat storage unit is a heat storage tank (51) that stores hot water,
the heat storage supply unit (50) includes a supply line (52) connected to a hot water outlet of the heat storage tank (51) and a hot water inlet of the refrigerant heat exchange unit (40), a discharge line (53) connected to a hot water outlet of the refrigerant heat exchange unit (40) and a hot water inlet of the heat storage tank (51), and a pump (54) that circulates the hot water between the heat storage tank (51) and the refrigerant heat exchange unit (40), and
the control unit (70) controls the amount of heat input to the refrigerant heat exchange unit (40) by adjusting a circulation amount of the hot water by the pump (54).

4. The electrolysis system (10) according to any one of claims 1 to 3, further comprising:
a raw material water heat exchange unit (36) configured to perform heat exchange between raw material water and the heat of the heat storage unit;
a raw material water line (32) configured to supply the raw material water to the steam generation unit through the raw material water heat exchange unit (36);
a raw material water bypass line (37) configured to branch from and join the raw material water line (32) to bypass the raw material water heat exchange unit (36); and
a control valve (38) configured to control supply of the raw material water to the raw material water heat exchange unit (36) and the raw material water bypass line (37), wherein
the control unit (70) controls the control valve (38) such that a temperature of the raw material water supplied to the steam generation unit (30) is lower during the system startup or during the high-temperature standby than during the normal operation.
